# EUROPÄISCHE PATENTSCHRIFT

(11) **EP 3 003 843 B1**
(45) Veröffentlichungstag und Bekanntmachung des Hinweises auf die Patenterteilung: **10.10.2018**
(21) Anmeldenummer: 14728118.2
(22) Anmeldetag: 23.05.2014
(51) Int. Cl.: B62J 17/08

(54) **WETTERSCHUTZVORRICHTUNG ZUR LÖSBAREN ANBRINGUNG AN EINEM ZWEI- ODER MEHRRAD**
WEATHER PROTECTION DEVICE FOR REMOVABLY ATTACHING TO A TWO- OR MULTI-WHEELED VEHICLE
DISPOSITIF DE PROTECTION CONTRE LES INTEMPÉRIES DESTINÉ À ÊTRE MONTÉ DE FAÇON AMOVIBLE SUR UN VÉHICULE À DEUX ROUES OU PLUS

(30) Priorität: 27.05.2013 DE 102013105423
(43) Veröffentlichungstag der Anmeldung: 13.04.2016
(73) Patentinhaber: Allnew Ag, 6340 Baar (CH)
(72) Erfinder: WUTTIG, René, CH-8280 Kreuzlingen (CH)
(74) Vertreter: Hepp Wenger Ryffel AG
(86) Internationale Anmeldenummer: PCT/EP2014/060670
(87) Internationale Veröffentlichungsnummer: WO 2014/191313

(56) Entgegenhaltungen:
- WO-A1-2013/021313
- DE-A1- 2 947 171
- DE-A1-102007 038 743
- DE-U1- 29 920 879
- JP-A- 2001 048 075

## Beschreibung

Die Erfindung bezieht sich auf eine Wetterschutzvorrichtung zur lösbaren Anbringung an einem Zwei- oder Mehrrad, bestehend aus mindestens einem flexiblen und zumindest in Teilen durchsichtigen Planelement, mindestens einem Rahmenelement zwischen dem das Planelement angeordnet ist und mindestens einem Fixierungselement zum lösbaren Anbringen der Wetterschutzvorrichtung an dem Zwei- oder Mehrrad.

### Stand der Technik

Schutz für Fahrradfahrer gegen Witterungsbedingungen ist in vielfältigen Ausführungsformen bekannt. In der Regel tragen die Zwei- oder Mehrradfahrer entsprechende Kleidung, um gegen insbesondere Regenwetter ausreichend gut gekleidet zu sein. Gegen übermässigen Sonnenschein werden ebenfalls bestimmte Kleidungsstücke getragen, beispielsweise Mützen, Kappen oder Jacken.

Beide Vorgehensweisen stellen jedoch immer wieder ein Problem dar, da sie in der Regel nicht ausreichend Schutz gegen die Witterungsbedingungen bieten.

Wetterschutzvorrichtungen in anderen Ausführungsformen sind beispielsweise der DE 296 17 431 U1 bekannt. Diese Druckschrift offenbart eine dachähnliche Konstruktion, die jedoch nur ungenügend Wetterschutz bietet und in ihrem Aufbau sehr sperrig und nicht flexibel einsetzbar ist. Andere Ausführungen sind in der Regel ponchoartig ausgelegt; dies bedeutet, dass der Fahrer ein entsprechendes Kleidungsstück trägt, welches sich über den Lenker und den Sattel eines Zweirades hinwegerstreckt. Solche Regenschutzmassnahmen sind jedoch in der Handhabung sehr umständlich und sind optisch gesehen nicht sehr attraktiv.

Aus der DE 10 2007 038 743 A1 ist eine Grundkonstruktion einer Wetterschutzvorrichtung bekannt, die vergleichbar mit Leichtpackzelten ausgebildet ist. Die grundlegenden Bauelemente sind eine Plane aus flexiblem, regenabweisendem Material und ein Rahmen, der aus einzeln zusammenfügbaren Streben, vergleichbar mit Zeltstangen, gebildet ist. Entsprechende Konnektierungselemente tragen Sorge dafür, dass die stabartigen und biegbaren Elemente miteinander verbunden sind und so einen Rahmen bilden, der die Plane umschliesst. Um eine solche Wetterschutzvorrichtung auszubilden, sind mehr als 20 solcher Konnektierungselemente notwendig. Es handelt sich dabei um eine selbstragende Konstruktion, die mittels Spannvorrichtung an dem Lenkerbereich des Fahrrades befestigt wird und sich von da über den Lenker hinweg und den Fahrradfahrer selbst erstreckt, sodass eine dachartige Konstruktion bereitgestellt wird. Zusätzlich ist ein Beinschutz vorgesehen, der auch die Beine des Fahrradfahrers gegen entsprechende Nässe schützt. Die Windschutzscheibe ist vorzugsweise aerodynamisch gewölbt, wobei entsprechende Kreuzverbinder als Streben vorgesehen sind, damit eine fensterartige Konstruktion entsteht, durch die der Fahrer hindurchsehen kann. Weitere zusätzliche Verstrebungselemente sind vorgesehen, um der dachartigen Konstruktion eine definierte Stabilität zu geben.

Zur Demontage der Wetterschutzvorrichtung sind alle Streben aus den jeweiligen Steckverbänden zu entfernen und die Plane von dem Rahmen zu lösen. Die Plane kann dann zusammengerollt oder gelegt werden. Im gelösten Zustand können, vergleichbar mit einem Zelt, die Streben ebenfalls mit in die Plane eingerollt werden.

Der Rahmen der Wetterschutzvorrichtung ist sehr steif. Dies bringt zum einen den Vorteil mit, dass für den Benutzer der Wetterschutzvorrichtung ein grosses Sicherheitsgefühl besteht. Aber aufgrund der stabartigen Ausbildungen und deren verbundenen Verbindungselemente entsteht ein steifes Konstrukt, das das Handhaben des Zwei- oder Mehrrades erheblich erschwert, da die Lenkbewegungen der Wetterschutzvorrichtung nicht ohne weiteres mitgemacht werden. Im Gegenteil: der Fahrer muss zusätzlich Kraft aufbringen, um die Lenkbewegung auszuführen. Die Wetterschutzvorrichtung ist weiterhin geradeaus gerichtet, verdreht sich leicht im Bereich des Sichtfensters und erschwert somit eine Lenkbewegung. Zudem ist die Wetterschutzvorrichtung sehr windempfindlich, da sie steif ausgerichtet ist und dem Winddruck, der sowohl von vorne gegen die Wetterschutzvorrichtung, als auch von der Seite beziehungsweise schräg auftrifft, nicht ausweicht. Sie bietet damit dem Wind Angriffsfläche. Die Gefahr besteht dabei, dass im Bereich der Verbindungsstücke die Stangen dem Druck, beziehungsweise der Bewegung, nicht standhalten. Es besteht eine latente Gefahr, dass die Stangen brechen. Die Wetterschutzvorrichtung würde so ihre Funktionalität verlieren.

In der DE 2 947 171 A1 ist ein Fahrrad mit einer Schutzhaube beschrieben. Diese Schutzhaube ist analog zu einem Kinderwagenverdeck ausgestaltet. Die Schutzhaube weist kein endlos umlaufendes Rahmenelement auf, welches ein Planelement aufnimmt. Auch können keine freien Enden von zusätzlich bereitgestellten Stützbügeln von Fixierelementen zur Befestigung an dem Zwei- oder Mehrrad aufgenommen werden.

### Aufgabe der Erfindung

Aufgabe der Erfindung ist es, eine Wetterschutzvorrichtung der vorstehenden Art derart weiter zu bilden, dass diese die Fahreigenschaften des Zwei- oder Mehrrades nur gering oder überhaupt nicht beeinträchtigt. Zudem soll eine zuverlässige Anwendung der Wetterschutzvorrichtung gewährleistet sein.

### Lösung der Aufgabe

Die Lösung der Aufgabe wird durch die Merkmale von Anspruch 1 bereitgestellt.

Insbesondere betrifft die vorliegende Erfindung eine Wetterschutzvorrichtung zur lösbaren Anbringung an einem Zwei- oder Mehrrad bestehend aus
- mindestens einem flexiblen und zumindest in Teilen durchsichtigen Planelement
- mindestens einem Rahmenelement zwischen dem das Planelement angeordnet ist und
- mindestens einem Fixierungselement zum lösbaren Anbringen der Wetterschutzvorrichtung an dem Zwei- oder Mehrrad dadurch gekennzeichnet, dass
- ein als erster Rahmen gebildetes äusseres, endlos umlaufendes Rahmenelement, bestehend aus einem flexiblen Material, das Planelement aufnimmt und
zumindest ein zweiter, weiterer Rahmen, eine Teilfläche des Planelementes spannt, wobei der weitere Rahmen u-förmig ausgestaltet und an mindestens zwei Punkten an dem Rahmenelement derart fixiert ist, dass die freien Enden des weiteren Rahmens von Fixierelementen zur Befestigung an dem Zwei- oder Mehrrad aufgenommen werden können.

Gemäss einer weiteren bevorzugten Ausführungsform ist die erfindungsgemässe Wetterschutzvorrichtung dadurch gekennzeichnet, dass eine Querstrebe vorgesehen ist, die über ein Kopplungselement teilbar ist.

Gemäss einer weiteren bevorzugten Ausführungsform ist die erfindungsgemässe Wetterschutzvorrichtung dadurch gekennzeichnet, dass der Rahmen eine Kohlenfaserstange ist.
Gemäss einer weiteren bevorzugten Ausführungsform ist die erfindungsgemässe Wetterschutzvorrichtung dadurch gekennzeichnet, dass die Dicke, beziehungsweise der Durchmesser der Kohlenfaserstange, maximal 5mm beträgt.

Gemäss einer weiteren bevorzugten Ausführungsform ist die erfindungsgemässe Wetterschutzvorrichtung dadurch gekennzeichnet, dass die Wetterschutzvorrichtung in zwei Bereiche aufgeteilt ist, nämlich, in einen ersten Bereichsteil und in einen zweiten Bereichsteil, wobei in Draufsicht gesehen, der zweite Bereichsteil schmäler ist als der erste Bereichsteil.

Gemäss einer weiteren bevorzugten Ausführungsform ist die erfindungsgemässe Wetterschutzvorrichtung dadurch gekennzeichnet, dass in dem ersten Bereichsteil ein Sichtfenster angeordnet ist.

### Beschreibung der Erfindung

Der Grundgedanke der Erfindung besteht darin, dass eine flexible Dachkonstruktion einschliesslich "Windschutzscheibe" als Sichtfeld bereitgestellt wird, die die Fahrbewegungen des Benutzers des Zwei- oder Mehrrades wenig oder gar nicht beeinträchtigt.

Dies wird insbesondere dadurch gewährleistet, dass ein Planelement, welches zumindest im Sichtbereich (im Bereich der Windschutzscheibe durchsichtig gestaltet), mit einem "Endlosrahmen" versehen ist. Dieser Endlosrahmen besteht aus einer stab- oder seilartigen Struktur, die das Planelement einmal ringsum umgibt. Im Sichtbereich selbst ist ein weiteres, in Draufsicht u-förmiges Rahmenelement vorgesehen. Auch dieses Rahmenelement besteht aus einer stab- oder seilartigen Struktur, die für den Anwendungszweck entsprechend gehalten und damit gebogen wird.

Die rahmenartige Struktur nimmt, überwiegend in Draufsicht gesehen, die Form eines Ovals ein. Dieses ist vorzugsweise als Endlosrahmen ausgebildet. Dabei kann vorgesehen sein, dass ein einziges stabartiges Element in taschenartigen Ausbildungen des Planelements geführt wird, sodass die gewünschte Ovalform entsteht. Die freien Enden können, beispielsweise durch ein Röhrenelement, fix miteinander verbunden werden. Alternativ hierzu kann auch ein Drahtseil vorgesehen sein. Auch dieses bringt die notwendige Stabilität des Planelements mit. Sinn des Rahmenelements ist es, dass durch das Biegen des stab- oder seilförmigen Elements, das Planelement, welches dazwischen angeordnet ist, gespannt wird. Dabei muss darauf geachtet werden, dass das Rahmenelement die entsprechenden Biegeradien, die zur Erzeugung der Ovalform notwendig sind, nachvollzieht und die Spannung dabei hält. Daher sind an sich nur Stäbe aus Kohlefaser oder Vollfiberglas oder biegesteife Seile, beispielsweise aus Stahl, geeignet.

Die erfindungsgemässe Wetterschutzvorrichtung umfasst somit ein einziges Planelement mit einem diesem umgebenden Rahmen und unterscheidet sich von bekannten Produkten (z.B. dem Veltop-System), bei denen eine separate Windschutzscheibe aus weniger flexiblem Material am Fahrrad montiert und anschliessend mit einem separaten Verdeck verbunden wird.

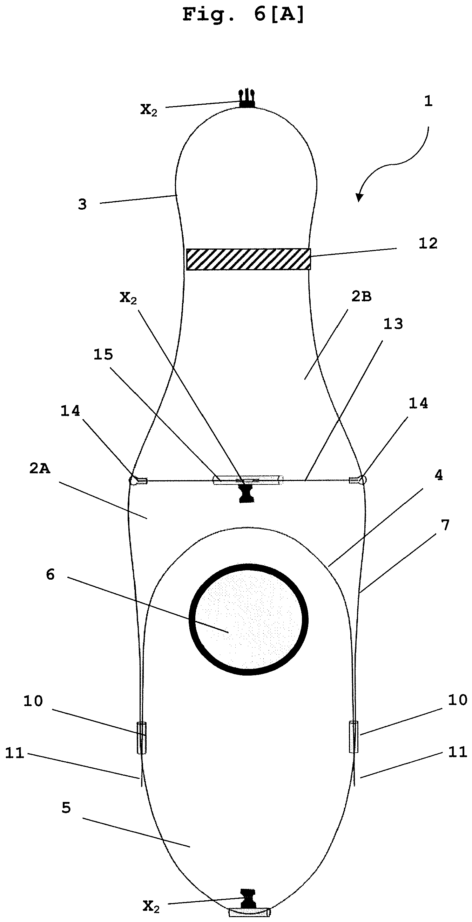

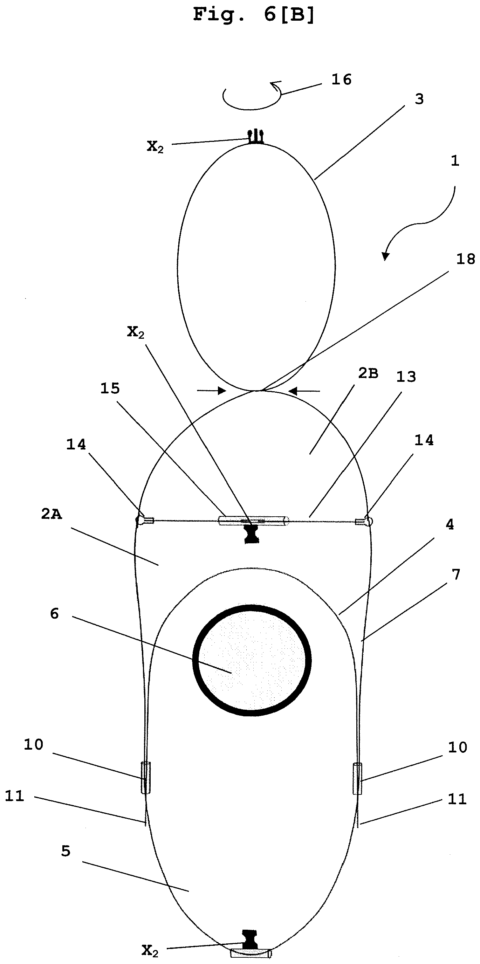

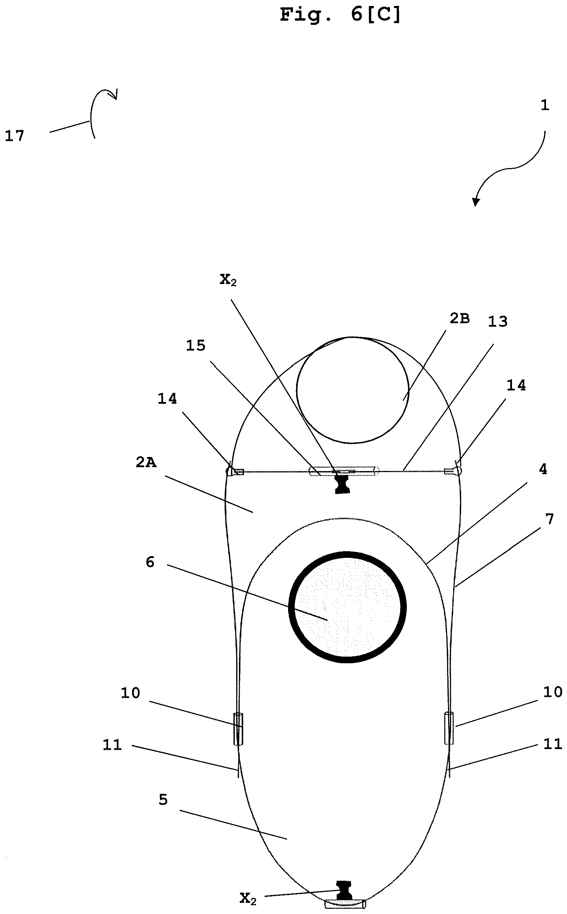

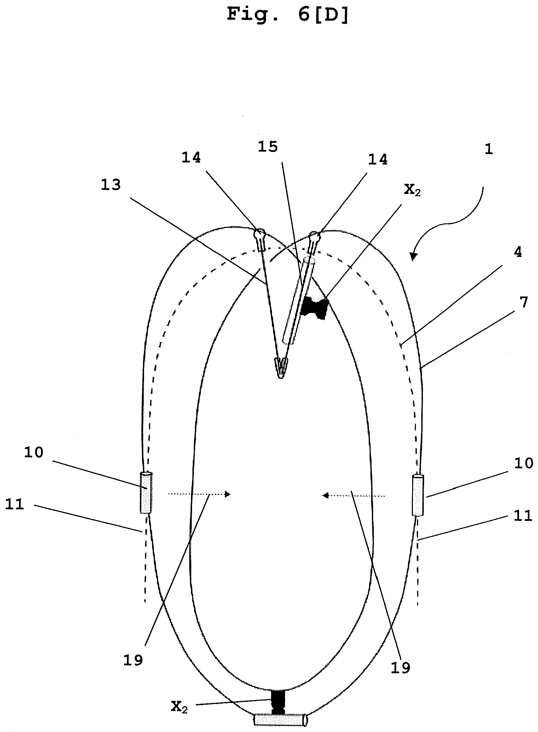

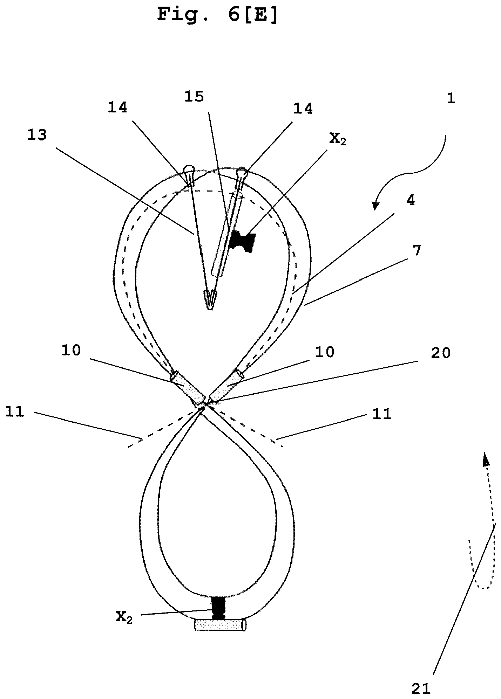

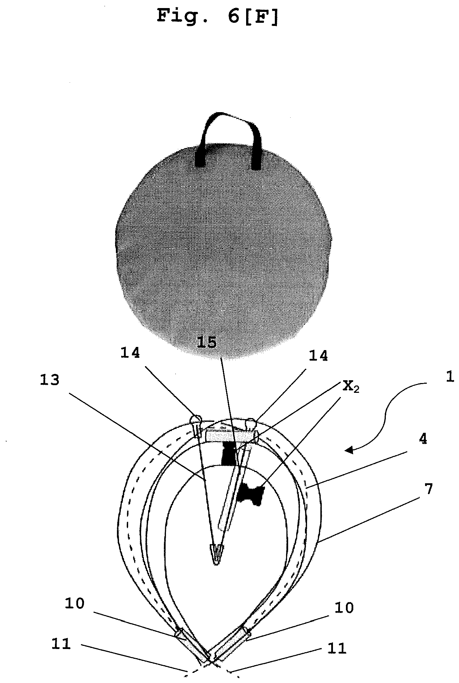

Im Bereich des Sichtfensters (d.h. im Sichtbereich des Planelements) ist ein weiterer Rahmen vorgesehen. Dieser bewirkt, dass das Sichtfenster in der gewünschten Position gehalten wird, sodass es noch ausreichend Abstand zum Fahrer des Zwei- oder Mehrrads hat. Dieser weitere Rahmen ist u-förmig ausgestaltet und an mindestens zwei Punkten fixiert. Wie nachstehend in Fig. 6 gezeigt, kann diese Fixierung an dem Endlosrahmen mit Hilfe eines Fixierbandes erfolgen.

Die freien Enden des weiteren Rahmens sind derart ausgebildet, dass sie von entsprechenden Fixierelementen aufgenommen werden, damit die Wetterschutzvorrichtung an ein Zwei- oder Mehrrad angebracht werden kann. Zur Fixierung sind an dem Lenker des Zwei- oder Mehrrades Aufnahmeelemente (Fixierelemente) vorgesehen, die die freien Enden zumindest teilweise aufnehmen oder anderweitig fest mit den freien Enden des weiteren Rahmens verbunden werden können, beispielsweise über eine Schraubverbindung oder mit Hilfe von Fixierbändern. Diese freien Enden des weiteren Rahmens werden bevorzugt in Bohrungen eingeführt, welche in den Fixierelementen vorhanden sind, so dass diese einen entsprechenden Halt erfahren.

Vorzugsweise sind an dem Lenker zusätzliche Griffelemente vorgesehen, in welche die freien Enden eingeführt werden können. Vorteilhafterweise handelt es sich dabei um Standard-Griffelemente, die beispielsweise über Klemmverbindungen an den Lenker des Zwei- oder Mehrrades angebracht werden können. Stopfenartige Aufnahmen nehmen die freien Enden des weiteren Rahmens auf. Die Durchmesser der stopfenartigen Ausnehmungen sind derart bemessen, dass diese die freien Enden vollständig aufnehmen und halten.

Gemäss einer bevorzugten Ausführungsform der vorliegenden Erfindung, werden zur Befestigung der Wetterschutzvorrichtung am Lenker eines Fahr-oder Mehrrades, Griffelemente vorgesehen, die beispielsweise über Klemmverbindungen derart an dem Lenker des Zwei- oder Mehrrades angebracht werden können, dass ihre den freien Enden, des weiteren Rahmens zugewandten Fixierelemente, gegenüber dem Lot auf den Boden, in Fahrtrichtung nach vorne geneigt sind, vorzugsweise um einen Winkel von 5° bis einschliesslich 45° Grad, besonders bevorzugt 30° bis einschliesslich 45° Grad. Hierdurch wird eine zusätzliche Spannung auf die erfindungsgemässe Wetterschutzvorrichtung im montierten Zustand ausgeübt.

Auf der dem Sichtfenster (Sichtbereich) gegenüberliegenden Seite der Wetterschutzvorrichtung, ist ebenfalls ein Fixierelement vorgesehen, vorzugsweise am vom Sichtbereich am weitesten entfernten Punkt, wie in Fig. 6[A] gezeigt. Dieses dient dazu, durch Fixierung der erfindungsgemässen Wetterschutzvorrichtung an zwei Punkten des Fahr- oder Mehrrades, eine dachartige Konstruktion zu bilden. Durch entsprechende Spannelemente, wie beispielsweise Seile oder Fixierelemente, kann das freie Ende entweder im Bereich des Sattels des Zwei- oder Mehrrades angeordnet werden oder in einem Abstand beispielsweise an dem Gepäckträger des Zwei- oder Mehrrades. Im nicht gespannten Zustand ist die Wetterschutzvorrichtung langgestreckt ausgebildet. Nach dem Einstecken der freien Enden des weiteren Rahmenteils in die dafür vorgesehenen Bohrungen, oder allgemein der Fixierung der freien Enden des weiteren Rahmens am Lenker, durch entsprechende Fixierelemente, erstreckt sich die Wetterschutzvorrichtung hiervon weg nach oben. Aufgrund des Eigengewichts der Wetterschutzvorrichtung, welches sehr gering ist, entsteht eine kleine Biegung, sodass der Nutzer das freie Ende der Wetterschutzvorrichtung erreichen kann. Er kann dieses beispielsweise an dem Fixierelement über den Lenker hinweg nach hinten ziehen und in der Nähe des Sattelbereichs fixieren. Dort ist ein Fixierelement (Gegenelement zum Fixierelement an der Wetterschutzvorrichtung) vorgesehen, in welche das freie Ende vorzugsweise eingeklickt werden kann. Erfindungsgemäss bevorzugt handelt es sich bei dem Fixierelement um einen herkömmlichen Klickverschluss. Es sind selbstverständlich aber auch andere herkömmliche Fixierelemente verwendbar. Durch das Herunterziehen des freien Endes der Wetterschutzvorrichtung entsteht ein kabinenartiger Charakter.

Analog kann auch am unteren freien Ende des Sichtbereichs der Wetterschutzvorrichtung ein entsprechendes Fixierelement, wie ein Klickverschluss, bereitgestellt sein, um die Wetterschutzvorrichtung an einem dritten Punkt des Fahr- oder Mehrrades zu fixieren, beispielsweise an der Gabel des Vorderrades. Hierzu ist am entsprechenden Abschnitt des Fahr- oder Mehrrades ein entsprechendes Fixierelement (Gegenelement zum Fixierelement an der Wetterschutzvorrichtung) vorgesehen, in welche das freie Ende vorzugsweise eingeklickt werden kann.

Besonders bevorzugt sind, wie vorstehend beschrieben, Fixierelemente am vorderen und hinteren Ende der Wetterschutzvorrichtung derart angeordnet, dass sie auch untereinander eine Verbindung ausbilden können, beispielsweise in Form eines Klickverschlusses. Beispielsweise kann am hinteren Ende der Wetterschutzvorrichtung das einzuklickende Element eines Klickverschlusses und am vorderen Ende der Wetterschutzvorrichtung das aufnehmende Element eines Klickverschlusses angeordnet sein. Dadurch können die Enden der Wetterschutzvorrichtung zur Aufbewahrung miteinander verbunden werden.

Eine Weiterbildung sieht vor, dass ausschliesslich im Sichtbereich ein durchsichtiges Planelement verwendet wird, wohingegen der übrige Teil mit dünner UV-beständiger Folie bedeckt ist, um so beispielsweise den Zwei- oder Mehrradfahrer vor übermässiger Sonneneinstrahlung zu schützen. Dabei kann ein solches Planelement die Struktur einer Zeltplane aufweisen.

Gemäss einer bevorzugten Ausführungsform ist das Planelement der erfindungsgemässen Wetterschutzvorrichtung, wie in den Figuren dargestellt, derart ausgebildet, dass es im vorderen Bereich, auch Sichtbereich oder Sichtfenster genannt, aus einem transparenten Material wie einer Folie aus PVC (Polyvinylchlorid) gefertigt ist, während der restliche Abschnitt des Planelements aus einem stoffartigen Material, wie beispielsweise Nylon, gefertigt ist. Dies erleichtert das Zusammenlegen der erfindungsgemässen Wetterschutzvorrichtung. Besonders bevorzugt ist das Planelement, wie beispielsweise nachstehend in Fig. 6 [A] gezeigt, in zwei Abschnitte unterteilt, die über eine Querstrebe miteinander verbunden sind. Der vordere, in Fahrtrichtung angeordnete Abschnitt ist hierbei aus einem transparenten Material gefertigt, während der hintere, entgegen der Fahrtrichtung angeordnete Abschnitt aus einem nicht-transparenten Material gefertigt ist.

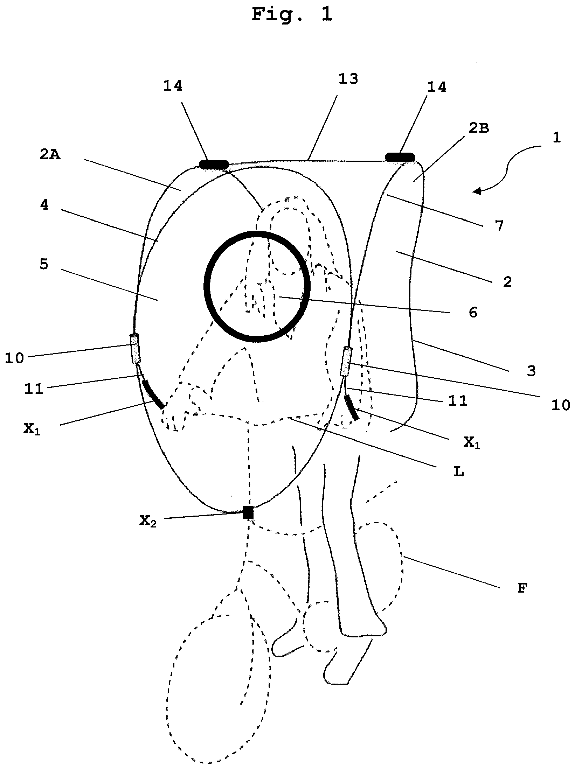

Wie beispielsweise nachstehend in Fig. 1 gezeigt, umfasst die erfindungsgemässe Wetterschutzvorrichtung im Sichtbereich vorzugsweise einen besonderen Abschnitt, der auch als Frontscheibe bezeichnet wird. Diese Frontscheibe ist integrativer Bestandteil des Planelements. Die Frontscheibe ist ebenfalls wie der Sichtbereich des Planelements aus einem transparenten Material gefertigt und unterscheidet sich von diesem dadurch, dass ein schlierenfreier Durchblick möglich ist, um ungehindert am Strassenverkehr teilnehmen zu können. Dies kann beispielsweise durch Verwendung eines wasserabweisenden Materials zur Fertigung der Frontscheibe, beziehungsweise durch Auftragen einer wasserabweisenden Schicht auf den Abschnitt der Frontscheibe erfolgen. Der Bereich der Frontscheibe kann vorzugsweise optisch hervorgehoben werden, beispielsweise durch einen die Frontscheibe umgebenden Rahmen aus vorzugsweise nicht-transparentem Material.

Der zur Fahrtrichtung entgegengesetzte hintere Abschnitt der Wetterschutzvorrichtung ist, wie in Fig. 6A dargestellt, vorzugsweise in seiner Taillierung enger gestaltet als der vordere Sichtbereich. Dies dient dazu, einem nach hinten blickenden Fahrer eine möglichst freie Sicht zu ermöglichen. Diese Taillierung kann beispielsweise durch eine entsprechende Form des Planelements der Wetterschutzvorrichtung oder durch ein Fixierband erreicht werden.

Um zu verhindern, dass Beine und Füsse ebenfalls der Witterung ausgesetzt werden, kann sich die Wetterschutzvorrichtung im Lenkerbereich auch in Richtung Boden erstrecken. Eine Ausführungsform sieht vor, dass sich der Schutz - entweder durchsichtig oder nicht durchsichtig gestaltet - bis zum Schutzblech bzw. Drehgelenk des Lenkers erstreckt. Erstreckt sich der Schutz bei einer anderen Ausführungsform weiter, so ist dieser geteilt und erstreckt sich links und rechts des Reifens des Zwei- oder Mehrrades.

Die Befestigung des Rahmens an dem Planelement erfolgt vorzugsweise entweder durch taschenartige Ausbildungen, die an dem Planelement vorgesehen sind, oder durch Anschweissungen oder Anklebungen des Rahmens an dem Planelement. Auch eine mechanische Befestigung mit Seilen oder Ösen ist ebenfalls denkbar.

Aufgrund der Endlosrahmenstruktur der Wetterschutzvorrichtung ist es möglich, diese ohne ein weiteres Hilfsmittel oder entsprechende Stangen zu entfernen und in ein kleines Packmass zu überführen. Dabei wird zunächst das freie Ende (dem Sichtschutzbereich gegenüberliegend), nachdem die Wetterschutzvorrichtung von dem Zwei- oder Mehrrad entfernt worden ist, einmal um 180° Grad verdreht und in Richtung Sichtfenster geklappt. Eine weitere Drehung um 180° Grad führt dann zu einem sehr kleinen Packmass, das wiederum den Vorteil mit sich bringt, dass mitgeführt in einer Tasche, die Wetterschutzvorrichtung durchaus an dem Fahrrad, beispielsweise im Bereich des Gepäckträgers, dauerhaft angeordnet werden kann.

Für den Gebrauch wird die Wetterschutzvorrichtung aus der Tasche entnommen und vorzugsweise ein Klipp, der die Form zusammenhält, gelöst. Aufgrund der entsprechenden Vorspannung durch das Verdrehen und Zusammenklappen entfaltet sich die Wetterschutzvorrichtung von selbst, bis sie langgestreckt am Boden zur Anlage kommt. Für den Benutzer ist es ein Einfaches, die jeweils freien Enden des weiteren Rahmenteiles in eine entsprechende Vorrichtung (Fixierelemente) einzustecken und an dem gegenüberliegenden Ende beispielsweise mittels eines Klipps (Klickverschlusses) die Dachkonstruktion entsprechend auszubilden. Die Installation dauert nur wenige Minuten, und der Zwei- oder Mehrradfahrer ist sofort wieder einsatzbereit.

Die Rahmenkonstruktion der erfindungsgemässen Wetterschutzvorrichtung bringt auch noch den Vorteil mit sich, dass sie sehr windstabil ist. Aufgrund der leichten Verdrehbarkeit, die für die Verpackung der Wetterschutzvorrichtung benötigt wird, passt sich die Wetterschutzvorrichtung, montiert an einem Zwei- oder Mehrrad, den entsprechenden Windverhältnissen an. Sie bietet nur einen sehr geringen Widerstand, sodass entsprechende Rahmenteile auch bei starkem Wind nicht einer hohen Belastung ausgesetzt sind. Eine dauerhafte Benutzung ist somit gewährleistet.

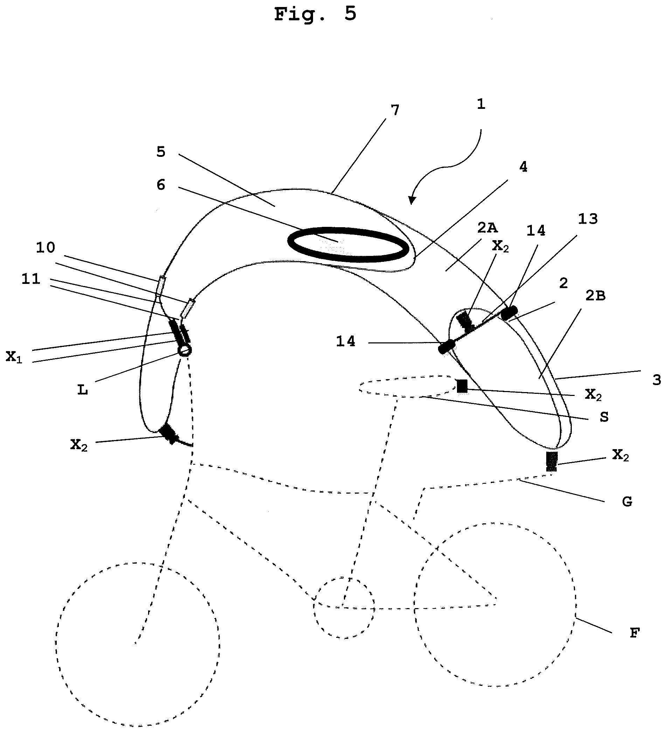

Die Drehbewegungen mit dem Lenkrad des Zwei- oder Mehrrades werden ebenfalls von der Wetterschutzvorrichtung problemlos ausgeführt, da der Rahmen in sich nicht steif und starr ist, sondern auch diese Drehbewegung mit ausführt. So kann auch das Zwei- oder Mehrrad mit der Wetterschutzvorrichtung geparkt werden. Hierfür kann die Wetterschutzvorrichtung in eine Parkposition überführt werden, wie in Fig. 5 gezeigt. Die Parkposition kann dadurch realisiert werden, dass die Wetterschutzvorrichtung durch einmaliges Verdrehen des hinteren Abschnitts um 180° Grad und Vorwärtsklappen des verdrehten hinteren Abschnitts in die in Fig. 6[C] gezeigte Anordnung überführt und anschliessend mit einem weiteren Fixierelement, welches beispielsweise an einem zur Taillierung des hinteren Abschnitts vorgesehenen Fixierband bereitgestellt ist, am Gepäckständer befestigt wird. Es handelt sich hierbei vorzugsweise um das gleiche Fixierelement, wie es am hinteren Ende des hinteren Abschnitts der Wetterschutzvorrichtung bereitgestellt ist, damit für beide Fixierelemente das gleiche Fixierelement (Gegenelement) am Gepäckständer verwendet werden kann. Dieses zusätzliche Fixierelement wird hierbei an einem am Gepäckständer angeordneten Fixierelement befestigt, wodurch die Wetterschutzvorrichtung, einerseits den Mittelteil des Rades, insbesondere den Sattel, vor Regen schützt, aber andererseits auch näher zum Rad hin angeordnet ist; sie bietet dem Wind somit weniger oder keine Angriffsfläche, sodass auch nicht die Gefahr besteht, dass das Zwei- oder Mehrrad umfällt oder die Wetterschutzvorrichtung sich aus der Haltevorrichtung entfernt.

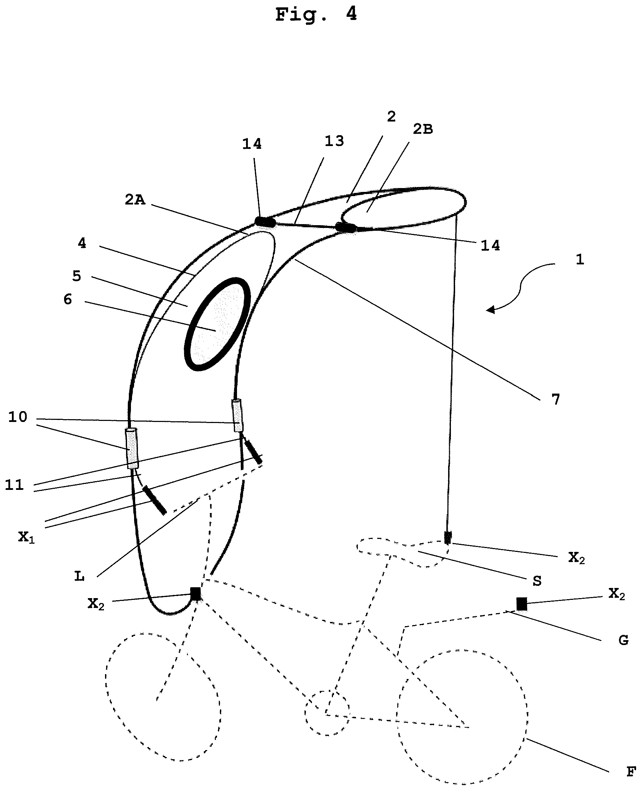

Zusätzlich bietet die erfindungsgemässe Wetterschutzvorrichtung auch sehr guten Schutz vor intensiver Sonneneinstrahlung. Erfindungsgemäss bevorzugt kann die erfindungsgemässe Wetterschutzvorrichtung bei Sonnenwetter in eine sogenannte "Cabrio-Position" gebracht werden, wie sie in Fig. 4 gezeigt ist. Die Cabrio-Position kann dadurch realisiert werden, dass die Wetterschutzvorrichtung durch einmaliges Verdrehen des hinteren Abschnitts um 180° Grad und Vorwärtsklappen des verdrehten hinteren Abschnitts in die in Fig. 6[C] gezeigte Anordnung überführt und anschliessend mit einem länglichen Fixierelement wie einer Schnur an dem am Sattel angeordneten Fixierelement befestigt wird.

Die erfindungsgemässe Wetterschutzvorrichtung eignet sich für jedes herkömmliche Fahrrad, einschliesslich E-Bikes, Liegerädern und Tandems. Auch für motorbetriebene Räder (Krafträder) ist die erfindungsgemässe Wetterschutzvorrichtung grundsätzlich geeignet, wobei bei sehr hohen Geschwindigkeiten allerdings eine Grenze der Einsetzbarkeit erreicht werden kann. Weiterhin kann die erfindungsgemässe Wetterschutzvorrichtung bei Elektroscootern oder Rollstühlen zum Einsatz kommen.

Insbesondere der hintere zur Fahrtrichtung entgegengesetzte Abschnitt der erfindungsgemässen Wetterschutzvorrichtung, ist für das Aufbringen von Informationen, wie beispielsweise Werbebotschaften, sehr gut geeignet.

Weitere vorteilhafte Ausgestaltungen gehen aus der nachfolgenden Beschreibung, den Zeichnungen sowie den Ansprüchen hervor.

### Zeichnungen

Es zeigen
- Fig. 1: eine schematische perspektivische Ansicht auf die Wetterschutzvorrichtung in Anbindung an einem Fahrrad;
- Fig. 2: eine Seitenansicht auf die Wetterschutzvorrichtung montiert an einem Fahrrad gemäss Fig. 1;
- Fig. 3: eine perspektivische Ansicht auf die Wetterschutzvorrichtung gemäss Fig. 1;
- Fig. 4: eine mögliche Einstellung der Wetterschutzvorrichtung an einem Fahrrad;
- Fig. 5: eine Seitenansicht auf die Wetterschutzvorrichtung bei einem geparkten Fahrrad;
- Fig. 6 [A]-[F]: Draufsicht auf die Wetterschutzvorrichtung gemäss den Figuren 1 bis 5 im ausgefalteten bis hin zum zusammengefalteten Zustand.

### Beschreibungen eines Ausführungsbeispiels

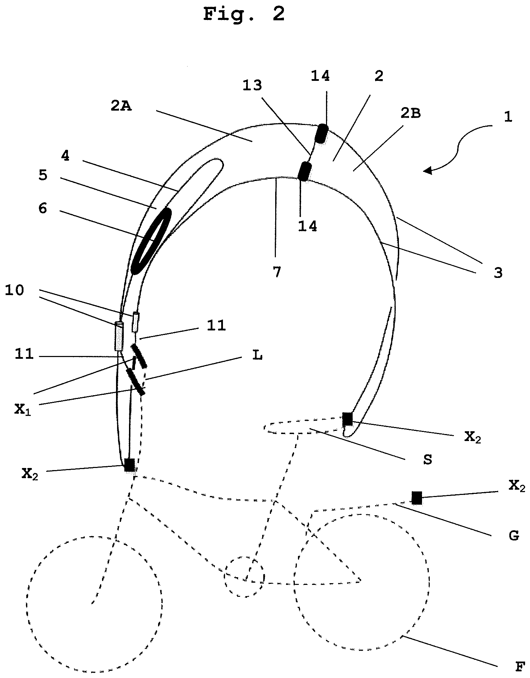

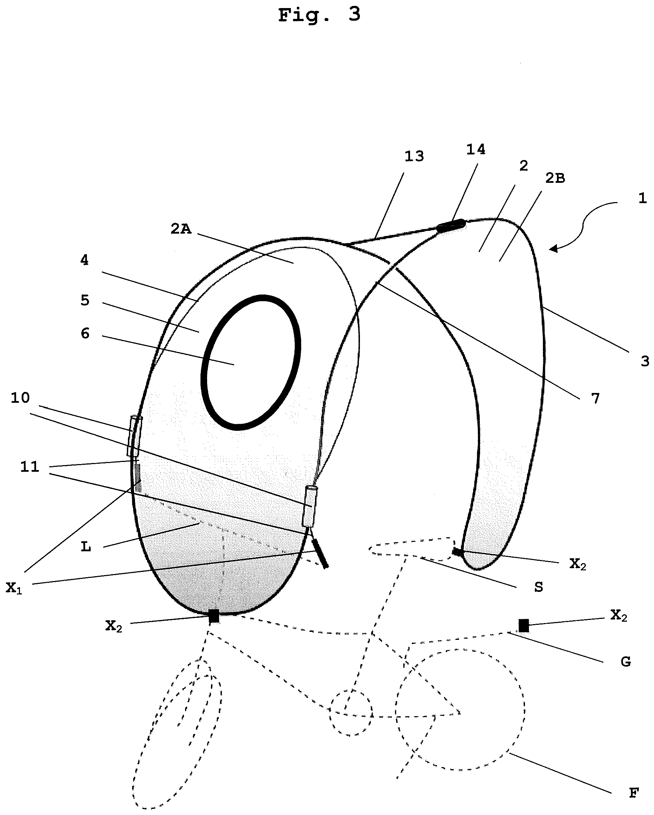

In den Figuren 1 bis 5 ist eine Wetterschutzvorrichtung 1 dargestellt. Die Wetterschutzvorrichtung 1 ist bei dem hier dargestellten Ausführungsbeispiel an einem Fahrrad F angeordnet.

Die Wetterschutzvorrichtung 1 besteht aus einem Planelement 2 und einem ersten Rahmen 3. Ferner ist ein weiterer Rahmen 4 vorgesehen, der im Sichtbereich 5 der Wetterschutzvorrichtung 1 angeordnet ist. Das Planelement 2 besteht bei dem hier dargestellten Ausführungsbeispiel aus einem ersten durchsichtigen Bereichsteil 2A (mit dem weiteren Rahmen 4 sowie dem Sichtbereich 5) und einem vorzugsweise nicht durchsichtigen Bereichsteil 2B.

Der durchsichtige Bereichsteil 2a ist im Sichtbereich 5 angeordnet. Um noch eine bessere Sicht zu ermöglichen, ist innerhalb des ersten Bereichsteils 2A neben dem durchsichtigen Planelement 2 eine Frontscheibe 6 angeordnet. Diese Frontscheibe 6 ist integrativer Bestandteil des durchsichtigen Planelements 2 und unterscheidet sich von diesem dadurch, dass ein schlierenfreier Durchblick möglich ist, um ungehindert am Strassenverkehr teilnehmen zu können.

Die Wetterschutzvorrichtung 1 umfasst den äusseren ersten Rahmen 3, der aus einem umlaufenden Rahmenelement 7 gebildet ist. Dieser Rahmen 3 ist oval ausgebildet und in sich vollständig flexibel. Er schliesst das Planelement 2 ein. Das Rahmenelement 7 kann aus einem stangenartigen Material gebildet sein, beispielsweise einem Kohlenfaserstab oder einem Stab aus Vollfiberglas, der einen geringen Querschnitt aufweist (bis vorzugsweise 5 mm, bevorzugt 4 bis 5 mm) oder aus einem Stahlseil gebildet sein, das eine definierte Steifigkeit aufweist. Ziel des Rahmenmateriales ist es, das Planelement 2 zwischen sich zu spannen, vorzugsweise straff zu spannen, so dass eine ebene glatte Fläche entsteht.

Der weitere Rahmen 4 ist im durchsichtigen Bereichsteil 2a angeordnet. Er ist in der Draufsicht u-förmig, wobei die freien Enden 11 sich in Richtung des Lenkers L des Fahrrades F erstrecken. Ein entsprechendes Fixierband 10 hält die freien Enden u-förmig und fixiert den weiteren Rahmen 4 an dem Rahmenelement 7 der Rahmens 3 derart, dass freie Enden 11 aus dem Fixierband 10 herausstehen. An dem Lenker L sind Fixierelemente X₁ angeordnet, in die die freien Enden des weiteren Rahmenteils einsteckbar sind. Zusätzliche Fixierelemente X₂ sind beispielsweise am Sattelbereich S oder am Gepäckträger G, sowie im vorderen Bereich (z.B. an der vorderen Gabel) des Fahrrades F angeordnet.

Eine Querstrebe 13, die eine Trennung zwischen dem ersten Bereichsteil 2A und dem weiteren Bereichsteil 2B darstellt, ist quer zur Längserstreckung angeordnet und mit Halteelementen 14 an dem ersten Rahmenelement 7 befestigt. Es zeichnet sich dadurch aus, dass es zweiteilig angeordnet ist und ein (in den Figuren 1 bis 5 aus Übersichtlichkeitsgründen nicht gezeigtes) Kopplungselement 15 aufweist. Das Kopplungselement 15 ist röhrenartig ausgestaltet und nimmt die beiden Enden der zweiteiligen Querstrebe 13 jeweils in sich auf.

Da beide Rahmen 3,4 sehr flexibel sind, kann die Wetterschutzvorrichtung 1, so wie es in Fig. 4 und 5 dargestellt ist, in unterschiedlicher Position gespannt werden.

In Fig. 4 ist eine so genannte "Cabrioversion" dargestellt. Sie zeichnet sich dadurch aus, dass wenig Stauhitze unterhalb der Wetterschutzvorrichtung 1 entsteht. Dies ist insbesondere eine Sommerstellung, um den Fahrradfahrer vor übermässiger Sonneneinstrahlung zu schützen. Die Cabrio-Position kann dadurch realisiert werden, dass die Wetterschutzvorrichtung 1 durch einmaliges Verdrehen des hinteren Abschnitts 2B um 180° Grad und Vorwärtsklappen des verdrehten hinteren Abschnitts 2B in die in Fig. 6[C] gezeigte Anordnung überführt und anschliessend mit einem länglichen Fixierelement, wie einer Schnur, an dem am Sattel S angeordneten Fixierelement X2 befestigt wird.

Hingegen ist in Fig. 1 bis 3 die Wetterschutzstellung gezeigt. Hier handelt es sich um eine Wetterschutzvorrichtung, die eine Art Fahrradkabine für den Fahrradfahrer bildet. Er erhält hier Rundumschutz und ist so vor Witterungseinflüssen, wie insbesondere Regen, gut geschützt.

Fig. 5 zeigt die so genannte "Parkstellung". Dies eignet sich insbesondere dafür, das Fahrrad F trocken in unterschiedlichen Bereichen abzustellen. Die Rahmenstruktur der Wetterschutzvorrichtung 1 ergibt für das Fahrrad F zusätzliche Stabilität, sodass das Fahrrad F sicher abgestellt werden kann. Ebenfalls ist das Fahrrad, aufgrund der aerodynamischen Struktur und der Flexibilität der Wetterschutzvorrichtung 1, auch bei stärkerem Wind, vor dem Umfallen sicher. Die Parkposition kann dadurch realisiert werden, dass die Wetterschutzvorrichtung 1 durch einmaliges Verdrehen des hinteren Abschnitts 2B um 180° Grad, und Vorwärtsklappen des verdrehten hinteren Abschnitts 2B, in die in Fig. 6[C] gezeigte Anordnung überführt und anschliessend mit einem weiteren Fixierelement X2, welches beispielsweise an einem zur Taillierung des hinteren Abschnitts vorgesehenen Fixierband 12 bereitgestellt ist, am Gepäckständer G befestigt werden.

In den Fig. 6 [A] bis [F] ist die Wetterschutzvorrichtung 1 ohne Fahrrad F dargestellt. Insbesondere dienen die Darstellungen dazu, die Wetterschutzvorrichtung 1 nochmals näher zu beschreiben und deren Zusammenfalten beziehungsweise Auseinanderfalten sowie die Anwendung zu erläutern.

In Fig. 6 [A] ist die Wetterschutzvorrichtung 1 gezeigt. Sie besteht aus dem umlaufenden Rahmenelement 7, das den ersten Rahmen 3 bildet, sowie einem weiteren Rahmenelement, das den weiteren Rahmen 4 bildet. Letzteres ist im durchsichtigen Bereichsteil 2A der Wetterschutzvorrichtung 1 u-förmig angeordnet. Ein entsprechendes Fixierband 10 hält die freien Enden u-förmig und fixiert den weiteren Rahmen 4 an dem Rahmenelement 7 des Rahmens 3 derart, dass freie Enden 11 aus dem Fixierband 10 herausstehen. Diese freien Enden 11 sind dafür geeignet, in Fixierelemente X₁, gemäss Fig. 1 bis 4, eingesteckt zu werden.

Der weitere Bereichsteil 2B ist dadurch gekennzeichnet, dass er in seiner Taillierung enger gestaltet ist als der erste Bereichsteil (in Draufsicht gesehen). Dies wird insbesondere durch zwei Merkmale erreicht. Zum einen ist ein weiteres Fixierband 12 (aus Übersichtlichkeitsgründen nur in Fig. 6[A] gezeigt) vorgesehen, das eine enge Taille ausbildet. Diese enge Taille ist deswegen notwendig, damit insbesondere der Sichtbereich für den Fahrradfahrer nach hinten offen ist. Es entsteht dadurch keine Sichtbeeinträchtigung. Eine Querstrebe 13, die eine Trennung zwischen dem ersten Bereichsteil 2A und dem weiteren Bereichsteil 2B darstellt, ist quer zur Längserstreckung angeordnet und mit Halteelementen 14 an dem ersten Rahmenelement 7 befestigt. Es zeichnet sich dadurch aus, dass es zweiteilig angeordnet ist und ein Kopplungselement 15 aufweist. Das Kopplungselement 15 ist röhrenartig ausgestaltet und nimmt die beiden Enden der zweiteiligen Querstrebe 13 jeweils in sich auf. In Fig. 6[A] ist die steife Darstellung gezeigt. Das Kopplungselement 15 hat beide freien Enden der Querstrebe 13 aufgenommen und stellt somit eine Versteifung des Rahmens 3 dar.

Um die Wetterschutzvorrichtung 1 zu verpacken, ist Folgendes vorgesehen: Wie in Fig. 1 [B] gezeigt, wird der nichtdurchsichtige Bereichsteil 2B der Wetterschutzvorrichtung 1 in Pfeilrichtung 16 verdreht. Es entsteht in dem Rahmenelement 7 eine "Acht". Dadurch wird die Länge des Rahmenelementes 7 bereits verkürzt. In einem weiteren Schritt ist der nichtdurchsichtige Bereichsteil 2B in Richtung des Pfeiles 17 zu bewegen. Damit wird bewirkt, dass der weitere Bereichsteil 2B auf den ersten Bereichsteil 2A geklappt wird. Aufgrund der Einschnürung 18, die in Fig. 6 [B] dargestellt ist, kann an dieser Stelle eine einfache Umklappung ausgeführt werden.

Wie in Fig. 6[C] dargestellt, hat sich die Wetterschutzvorrichtung 1, durch die vorstehend beschriebene Operation, weiter in Bezug auf ihre Länge verkürzt.

In Fig. 6[D] wird nun die Querstrebe 13 gelöst, indem das Kopplungselement 15 zu einer Seite hin verschoben wird. Dadurch wird die Querstrebe 13 zweiteilig. Dies erlaubt eine weitere höhere Flexibilität. Im Bereich des ersten Bereichsteils 2A, insbesondere im Bereich des Fixierbandes 10, erfolgt ein Zusammendrücken in Pfeilrichtung 19 bis, wie in Fig. 6[E] dargestellt ist, eine weitere Einschnürung 20 entsteht. Die Einschnürung 20 ist wiederum dafür gedacht, ein Umklappen in Pfeilrichtung 21 zu bewirken, wie es dann im Endstadium in Fig. 6 [F] dargestellt ist.

Die Wetterschutzvorrichtung 1 hat sich von Fig. 6[A] zu Fig. 6[F] um mehr als dreiviertel ihrer Gesamtlänge verkürzt. Dadurch entsteht ein Packmass, das sehr handhabbar ist, sodass die Wetterschutzvorrichtung ständig, beispielsweise in seitlicher Anordnung an dem Gepäckträger, mitführbar ist. In Fig. 6[F] ist die Überführung in eine entsprechende Verpackung angedeutet.

Die Wetterschutzvorrichtung 1 ist ein sehr kompaktes Bauteil, das mit wenigen Bauteilen herstellbar ist. Es zeichnet sich insbesondere dadurch aus, dass es leicht und ohne Erläuterung anwendbar ist.

Für denjenigen, der die Wetterschutzvorrichtung einsetzt, entsteht ein optimaler Wetterschutz sowohl gegen Sonne, Regen als auch Wind. Die Wetterschutzvorrichtung beeinträchtigt nicht die Fahrweise des Zwei- oder Mehrrades. Es gibt insbesondere auch die Möglichkeit, beim Parken des Zwei- oder Mehrrades dieses trocken und sicher abzustellen.

Wird die Wetterschutzvorrichtung nicht mehr benötigt, so ist sie mit wenigen Handgriffen sehr klein verstaubar, ohne dass viele bewegliche Teile, vergleichbar mit einem Zelt, zuerst zusammengesteckt beziehungsweise zusammengebaut werden müssen. Der Aufbau geschieht in wenigen Sekunden, sodass auch erst bei Einsetzen des Regens ein Aufbau erfolgen kann.

Die Wetterschutzvorrichtung entspricht auch den Regeln der Strassenverkehrsordnung. Der Sichtbereich ist klar ausgestaltet. Die Sichteinschränkung nach hinten ist nicht vorhanden. Aber dennoch lässt insbesondere der weitere Bereichsteil 2B die Möglichkeit zu, auch entsprechende Werbefläche anzubringen. Damit eignet sich die Wetterschutzvorrichtung insbesondere auch für Leihfahrräder.

### BEZUGSZEICHENLISTE

### Wetterschutz zur lösbaren Anbringung an eineim Zwei- oder Mehrrad

- 1: Wetterschutzvorrichtung
- 2: Planelement
- 2a: erster Bereichsteil
- 2b: zweiter Bereichsteil
- 3: erster Rahmen
- 4: weiterer Rahmen
- 5: Sichtbereich
- 6: Frontscheibe
- 7: Umlaufendes Rahmenelement
- 8: -
- 9: -
- 10: Fixierband
- 11: Freie Enden
- 12: Fixierband
- 13: Querstrebe
- 14: Halteelemente
- 15: Kopplungselement
- 16: Pfeilrichtung
- 17: Pfeil
- 18: Einschnürung
- 19: Pfeilrichtung
- 20: Einschnürung
- 21: Pfeilrichtung

- F: Fahrrad
- L: Lenker
- X1: Fixierelemente/Fixierungselemente
- X2: zusätzliche Fixierelemente/Fixierungselemente
- S: Sattelbereich
- G: Gepäckträger

## Patentansprüche

1. Wetterschutzvorrichtung (1) zur lösbaren Anbringung an einem Zwei- oder Mehrrad bestehend aus
- mindestens einem flexiblen und zumindest in Teilen durchsichtigen Planelement (2)
- mindestens einem Rahmenelement zwischen dem das Planelement (2) angeordnet ist und
- mindestens einem Fixierungselement zum lösbaren Anbringen der Wetterschutzvorrichtung an dem Zwei- oder Mehrrad
**dadurch gekennzeichnet, dass**
- ein als erster Rahmen (3) gebildetes äusseres endlos umlaufendes Rahmenelement (7) bestehend aus einem flexiblen Material das Planelement (2) aufnimmt und
- zumindest ein zweiter weiterer Rahmen (4) eine Teilfläche des Planelementes (2) spannt, wobei der weitere Rahmen (4) u-förmig ausgestaltet und an mindestens zwei Punkten an dem Rahmenelement (7) derart fixiert ist, dass die freien Enden des weiteren Rahmens (4) von Fixierelementen zur Befestigung an dem Zwei- oder Mehrrad aufgenommen werden können.

2. Wetterschutzvorrichtung nach Anspruch 1, **dadurch gekennzeichnet, dass** eine Querstrebe (13) vorgesehen ist, die über ein Kopplungselement (15) teilbar ist.

3. Wetterschutzvorrichtung nach Anspruch 1 oder 2, **dadurch gekennzeichnet, dass** das Planelement (2) in zwei Bereichsteile (2A, 2B) unterteilt ist, vorzugsweise in einen transparenten Bereichsteil (2A) und einen nicht transparenten Bereichsteil (2B).

4. Wetterschutzvorrichtung nach Anspruch 3, **dadurch gekennzeichnet, dass** das Planelement (2) an der Querstange (13) in zwei Bereichsteile (2A, 2B) unterteilt ist.

5. Wetterschutzvorrichtung nach einem der vorherigen Ansprüche 3 bis 4, **dadurch gekennzeichnet, dass** in Draufsicht gesehen der zweite Bereichsteil (2B) schmäler als der erste Bereichsteil (2A) ist.

6. Wetterschutzvorrichtung nach Anspruch 5, **dadurch gekennzeichnet, dass** ein Fixierband (12) zur Taillierung des zweiten Bereichsteils (2B) bereitgestellt ist.

7. Wetterschutzvorrichtung nach einem der Ansprüche 1 bis 6, **dadurch gekennzeichnet, dass** die Wetterschutzvorrichtung (1) eine Frontscheibe (6) aufweist, vorzugsweise in dem ersten Bereichsteil (2A).

8. Wetterschutzvorrichtung nach einem der vorherigen Ansprüche 1 bis 7, **dadurch gekennzeichnet, dass** an der Wetterschutzvorrichtung (1) weitere Fixierelemente (X₂) zur Befestigung der Wetterschutzvorrichtung (1) an einem Zwei- oder Mehrrad angeordnet sind.

9. Wetterschutzvorrichtung nach einem der vorherigen Ansprüche 1 bis 8, **dadurch gekennzeichnet, dass** die Wetterschutzvorrichtung (1) durch Zusammenklappen um mehr als dreiviertel ihrer Gesamtlänge verkürzt werden kann.

10. Artikel, vorzugsweise Verpackung, enthaltend eine Wetterschutzvorrichtung gemäss einem der Ansprüche 1 bis 9.

11. Zwei- oder Mehrrad, vorzugsweise Fahrrad, umfassend Fixierelemente (X1, X2) zur Befestigung einer Wetterschutzvorrichtung gemäss einem der Ansprüche 1 bis 9.

12. Zwei- oder Mehrrad nach Anspruch 11, **dadurch gekennzeichnet, dass** die Fixierelemente (X1) am Lenker angebracht sind, vorzugsweise dergestalt, dass ihre den freien Enden (11) des weiteren Rahmens (4) zugewandten Fixierelemente gegenüber dem Lot auf den Boden in Fahrtrichtung nach vorne geneigt sind, vorzugsweise um einen Winkel von 5° bis einschliesslich 45° Grad, besonders bevorzugt 30° bis einschliesslich 45°Grad.

13. Zwei- oder Mehrrad nach Anspruch 12, umfassend eine an dem Zwei- oder Mehrrad befestigte Wetterschutzvorrichtung (1) gemäss einem der Ansprüche 1 bis 9.

14. Zwei- oder Mehrrad nach Anspruch 13, **dadurch gekennzeichnet, dass** die Wetterschutzvorrichtung (1) an Fixierelementen (X1, X2) befestigt ist, wobei die Fixierelemente (X1) am Lenker und das oder die Fixierelemente (X2) am Sattel und/oder am Gepäckständer angeordnet sind.

15. Verwendung einer Wetterschutzvorrichtung gemäss einem der Ansprüche 1 bis 9 zur Ausstattung eines Zwei- oder Mehrrads, vorzugsweise Fahrrads, mit einem Wetterschutz.

## Claims

1. A weather protection device (1) for removably attaching to a two- or multi-wheeled vehicle, consisting of
- at least one flexible and at least partially translucent plan element (2),
- at least one frame element, between which the plan element (2) is arranged, and
- at least one fixing element for releasably attaching the weather protection device to the two- or multi-wheeled vehicle,
**characterised in that**
- an outer, continuously circumferential frame element (7) consisting of a flexible material and formed as a first frame (3) receives the plan element (2), and
- at least one second further frame (4) spans a sub-area of the plan element (2), wherein the further frame (4) is U-shaped and is fixed at least at two points to the frame element (7) in such a way that the free ends of the further frame (4) can be received by fixing elements for fastening to the two- or multi-wheeled vehicle.

2. The weather protection device according to claim 1, **characterised in that** a transverse strut (13) is provided, which can be divided via a coupling element (15).

3. The weather protection device according to claim 1 or 2, **characterised in that** the plan element (2) is divided into two regions (2A, 2B), preferably into a transparent region (2A) and a non-transparent region (2B).

4. The weather protection device according to claim 3, **characterised in that** the plan element (2) is divided at the transverse strut (13) into two regions (2A, 2B).

5. The weather protection device according to any one of preceding clams 3 or 4, **characterised in that,** as considered in plan view, the second region (2B) is narrower than the first region (2A).

6. The weather protection device according to claim 5, **characterised in that** a fixing band (12) for tapering the second region (2B) is provided.

7. The weather protection device according to any one of claims 1 to 6, **characterised in that** the weather protection device (1) has a front panel (6), preferably in the first region (2A).

8. The weather protection device according to any one of the preceding claims, **characterised in that** further fixing elements (X₂) for fastening the weather protection device (1) to a two- or multi-wheeled vehicle are arranged on the weather protection device (1).

9. The weather protection device according to any one of preceding claims 1 to 8, **characterised in that** the weather protection device (1) can be shortened by more than three thirds of its total length by being folded.

10. An article, preferably packaging, containing a weather protection device according to any one of claims 1 to 9.

11. A two- or multi-wheeled vehicle, preferably a bicycle, comprising fixing elements (X1, X2) for fastening a weather protection device according to any one of claims 1 to 9.

12. The two- or multi-wheeled vehicle according to claim 11, **characterised in that** the fixing elements (X1) are attached to the handlebar, preferably in such a way that the fixing elements facing towards the free ends (11) of the further frame (4) are inclined to the front towards the ground in the direction of travel relative to the vertical, preferably by an angle of from 5° to 45°inclusive, particularly preferably 30° to 45° inclusive.

13. The two- or multi-wheeled vehicle according to claim 12, comprising a weather protection device (1) according to any one of claims 1 to 9 fastened to the two- or multi-wheeled vehicle.

14. The two- or multi-wheeled vehicle according to claim 13, **characterised in that** the weather protection device (1) is fastened to fixing elements (X1, X2), wherein the fixing elements (X1) are arranged on the handlebar and the one or more fixing elements (X2) is/are arranged on the saddle and/or on the luggage rack.

15. Use of a weather protection device according to any one of claims 1 to 9 for equipping a two- or multi-wheeled vehicle, preferably a bicycle, with weather protection.

## Revendications

1. Dispositif de protection contre les intempéries (1) destiné à une fixation amovible à un véhicule à deux roues ou à roues multiples constitué
- d'au moins un élément plan (2) flexible et au moins partiellement transparent,
- d'au moins un élément de cadre dans lequel est disposé l'élément plan (2), et
- d'au moins un élément de fixation pour la fixation amovible du dispositif de protection contre les intempéries sur le véhicule à deux roues ou à roues multiples,
**caractérisé en ce**
- **qu'**un élément de cadre (7), constitué d'un matériau flexible, extérieur, parcourant sans fin la circonférence sous la forme d'un premier cadre (3), réceptionne l'élément plan (2), et
- **qu'**au moins un deuxième autre cadre (4) sous-tend une surface partielle de l'élément plan (2), où l'autre cadre (4) est conçu en forme de U et est fixé à au moins deux points sur l'élément de cadre (7) de telle manière que les extrémités libres de l'autre cadre (4) peuvent être reçues par des éléments de fixation pour la fixation sur le véhicule à deux roues ou à roues multiples.

2. Dispositif de protection contre les intempéries selon la revendication 1, **caractérisé en ce qu'**une barre transversale (13) est prévue qui peut être subdivisée par le biais d'un élément de couplage (15).

3. Dispositif de protection contre les intempéries selon la revendication 1 ou 2, **caractérisé en ce que** l'élément plan (2) est subdivisé en deux parties partielles (2A, 2B), de préférence en une partie partielle transparente (2A) et une partie partielle non transparente (2B).

4. Dispositif de protection contre les intempéries selon la revendication 3, **caractérisé en ce que** l'élément plan (2) est subdivisé en deux parties partielles (2A, 2B) au niveau de la barre transversale (13).

5. Dispositif de protection contre les intempéries selon l'une des revendications précédentes, **caractérisé en ce que,** en vue plongeante, la deuxième partie partielle (2B) est plus mince que la première partie partielle (2A).

6. Dispositif de protection contre les intempéries selon la revendication 5, **caractérisé en ce qu'**une bande de fixation (12) est prévue pour le dimensionnement de la deuxième partie partielle (2B).

7. Dispositif de protection contre les intempéries selon l'une des revendications 1 à 6, **caractérisé en ce que** le dispositif de protection contre les intempéries (1) présente une vitre frontale (6), de préférence, dans la première partie partielle (2A).

8. Dispositif de protection contre les intempéries selon l'une des revendications précédentes 1 à 7, **caractérisé en ce que** d'autres éléments de fixation (X2) sont disposés sur le dispositif de protection contre les intempéries (1) pour la fixation du dispositif de protection contre les intempéries (1) au niveau d'un véhicule à deux roues ou à roues multiples.

9. Dispositif de protection contre les intempéries selon l'une des revendications précédentes 1 à 8, **caractérisé en ce que** le dispositif de protection contre les intempéries (1) peut être raccourci par un repliement de plus des trois quarts de sa longueur totale.

10. Article, de préférence emballage, contenant un dispositif de protection contre les intempéries selon l'une des revendications 1 à 9.

11. Véhicule à deux roues ou à roues multiples, de préférence, bicyclette, comprenant des éléments de fixation (X1, X2) pour la fixation d'un dispositif de protection contre les intempéries selon l'une des revendications 1 à 9.

12. Véhicule à deux roues ou à roues multiples selon la revendication 11, **caractérisé en ce que** les éléments de fixation (X1) sont rapportés au niveau de la direction, de préférence conçus de sorte que leurs éléments de fixations orientés vers les extrémités libres (11) de l'autre cadre (4) sont inclinés en face de la soudure sur le socle dans la direction de déplacement vers l'avant, de préférence d'un angle de 5 ° à 45 degrés inclus, de manière particulièrement préférée, de 30 ° à 45 degrés inclus.

13. Véhicule à deux roues ou à roues multiples selon la revendication 12, comprenant un dispositif de protection contre les intempéries (1) selon l'une des revendications 1 à 9 fixé au niveau du véhicule à deux roues ou à plusieurs roues.

14. Véhicule à deux roues ou à roues multiples selon la revendication 13, **caractérisé en ce que** le dispositif de protection contre les intempéries (1) est fixé à des éléments de fixation (X1, X2), où les éléments de fixation (X1) sont placés au niveau de la direction et le ou les éléments de fixation (X2) sont fixés sur la selle et/ou au porte-bagages.

15. Utilisation d'un dispositif de protection contre les intempéries selon l'une des revendications 1 à 9 destiné à l'équipement d'un véhicule à deux roues ou à roues multiples, de préférence d'une bicyclette dotée d'une protection contre les intempéries.
